Europäisches Patentamt

European Patent Office

Office européen des brevets

(11) Numéro de publication: **0 168 371**
A2

# (12) DEMANDE DE BREVET EUROPEEN

(21) Numéro de dépôt: 85870079.2

(22) Date de dépôt: 03.06.85

(51) Int. Cl.⁴: **B 01 D 11/02**

(30) Priorité: 13.06.84 LU 85413

(43) Date de publication de la demande:
15.01.86 Bulletin 86/3

(84) Etats contractants désignés:
AT BE CH DE FR GB IT LI NL SE

(71) Demandeur: ABAY S.A., Société belge dite:
Rue de Genève 4 btes 26/28
B-1140 Bruxelles(BE)

(72) Inventeur: Hendrickx, Achille
Residentie Beatrijs 79
B-3300 Tienen(BE)

(74) Mandataire: Kellens, Georges E.
c/o BUGNION S.A. rue de Namur 43 -Bte 3
B-1000 Bruxelles(BE)

(54) Procédé et appareil pour le transfert d'énergie thermique et/ou de matière entre un liquide et une matière solide.

(57) Procédé de transfert d'énergie thermique entre un solvant liquide et une matière solide soluble, c'est-à-dire, généralement et de manière connue, préalablement broyée, défibrée ou découpée, et procédé plus particulièrement destiné à l'extraction de sucres, fécules ou autres éléments actifs de végétaux, caractérisé en ce que l'on met cette matière solide en progression continue, tout en effectuant simultanément son brassage, et qu'elle est soumise à un arrosage permanent par des fractions du solvant liquide de plus en plus enrichi et provenant de l'égouttage continu de la matière solide, ce solvant liquide et la matière solide progressant à contre courant l'une de l'autre de manière rigoureuse et prédéterminée, de sorte à réaliser un contact renouvelé entre le solvant liquide et la matière solide ce qui favorise à la fois l'échange thermique par conduction et l'extraction des éléments solubles.

EP 0 168 371 A2

Croydon Printing Company Ltd.

- 1 -

## PROCEDE ET APPAREIL POUR LE TRANSFERT D'ENERGIE THERMIQUE ET/OU DE MATIERE ENTRE UN LIQUIDE ET UNE MATIERE SOLIDE

La présente invention est relative à un procédé de transfert d'énergie thermique entre un solvant liquide et une matière soluble, qui permet la réalisation conjointe et en plus de l'extraction continue de produits solubles au moyen du solvant liquide, applicable notamment à l'extraction de sucres, fécules ou autres éléments actifs de végétaux.

L'invention concerne également l'appareil pour la mise en oeuvre de ce procédé de transfert d'énergie thermique et/ou de matière.

On connaît déjà dans le domaine de l'extraction continue de jus sucrés en particulier, à partir par exemple de betterave sucrière, de canne à sucre, de pomme ou de marc de raisin, des appareils et procédés traitant un produit solide préalablement broyé, défibré ou découpé, par un solvant approprié tel que de l'eau et dans lesquels on soumet la masse solide mise en progression au contact du solvant par trempage ou arrosage à contre courant, le solvant s'enrichissant de plus en plus depuis son introduction jusqu'à sa sortie de l'appareil tandis qu'inversement, le produit s'épuise de sa partie soluble.

On sait également que la mise à une certaine température des tissus de la masse solide modifie la structure de ses cellules, ce qui favorise l'extraction du sucre, et l'on prévoit donc de réchauffer le mélange solide-liquide, le liquide étant avantageusement utilisé pour transmettre à la matière solide les calories qui lui ont été transmises par un échangeur thermique généralement alimenté par de la vapeur.

Pour transmettre l'énergie thermique et favoriser l'extraction du sucre, différentes méthodes ont été proposées. L'on peut procéder au trempage et à l'égouttage de la matière solide immergée dans le liquide, l'on peut assurer un mélange intime et prolongé de la matière solide et du liquide, l'on peut également procéder à un arrosage séquentiel d'un lit de matière solide se déplaçant sous des rampes d'arrosage, mais ces méthodes présentent de grands inconvénients.

En particulier on connaît un procédé dans lequel la masse solide est véhiculée en une couche épaisse sur un tapis transporteur horizontal perforé, une dizaine de rampes d'arrosage ou de répartition du solvant surplombe la couche, le solvant recueilli sous la couche est conduit à contre courant de la progression du produit à la rampe voisine de celle dont il provient. Ce procédé implique, pour des raisons de rentabilité de l'installation, la constitution de couche épaisse de produit d'où un mauvais contact de la phase solide-liquide, passages préférentiels, mise en fluidisation du lit lorsque la quantité de solvant est trop importante que pour pénétrer au travers du lit de la masse solide, il en découle un mauvais transfert thermique ainsi qu'une diminution du rendement du procédé.

On connaît également un procédé dans lequel la masse solide est véhiculée dans une enceinte fermée à l'aide d'une ou de deux vis sans fin, le produit effectue un trajet incliné ou ascendant tandis que le solvant est introduit en un point en haut du trajet, le solvant s'enrichit par le passage à contre courant du produit. La phase solide-liquide est franche et continue, toutefois la masse n'est soumise qu'à un seul trempage, ce qui est défavorable à l'extraction, de plus la veine liquide a tendance à s'auto-équilibrer en produit dissout au détriment du rendement du procédé tant sur le plan thermique que sur celui de l'extraction.

La présente invention vise à remédier à ces inconvénients en fournissant un procédé assurant à la fois un excellent transfert d'énergie thermique ainsi qu'une extraction continue à haut rendement de matière, ceci en effectuant une percolation et un égouttage optimisés

- 3 -

de la matière solide tout en enrichissant progressivement le solvant en produit soluble.

Conformément à l'invention, le procédé de transfert d'énergie thermique entre un solvant liquide et une matière solide soluble, c'est-à-dire, généralement et de manière connue, préalablement broyée, défibrée ou découpée, et procédé plus particulièrement destiné à l'extraction de sucres, fécules ou autres éléments actifs de végétaux, caractérisé en ce que l'on met cette matière solide en progression continue, tout en effectuant simultanément son brassage, et qu'elle est soumise à un arrosage permanent par des fractions du solvant liquide de plus en plus enrichi et provenant de l'égouttage continu de la matière solide. Ce solvant liquide et la matière solide progressent à contre courant l'une de l'autre de manière rigoureuse et prédéterminée, de sorte à réaliser un contact renouvelé entre le solvant liquide et la matière solide, ce qui favorise à la fois l'échange thermique par conduction et l'extraction des éléments solubles.

Si un des buts de l'invention est donc d'obtenir un meilleur transfert thermique, il a pour but également d'améliorer l'extraction des éléments solubles. Dès lors, on peut envisager le procédé essentiellement en vue de favoriser l'un ou l'autre but et le mettre en oeuvre après avoir déjà réalisé, par un procédé connu, soit un transfert thermique partiel, ou une extraction partielle des éléments solubles, ou encore inversément, une extraction complète et finale.

Le procédé selon l'invention étant alors utilisé comme un perfectionnement d'une installation, recourant à un procédé connu.

Si l'on utilise uniquement le procédé selon l'invention, on doit prévoir de prolonger le traitement, c'est-à-dire l'arrosage permanent et continu de la matière solide, même au-delà de ce qui serait nécessaire pour le transfert thermique.

0168371

- 4 -

Pour la mise en oeuvre du procédé selon l'invention, on prévoit un appareil comportant à une extrémité, une entrée par un moyen connu, de la matière solide froide et une sortie du solvant liquide ayant cédé ses calories et s'étant enrichi des éléments solubles et devenu soluté, et, à l'autre extrémité, une entrée du solvant chaud et une sortie de la matière solide réchauffée dépouillée de ses éléments solubles et appareil caractérisé en ce qu'il est essentiellement constitué par un tambour extérieur rotatif de forme généralement cylindrique, placé horizontalement et à l'intérieur duquel est prévu coaxialement un autre tambour perforé, chacun des deux tambours comportant un moyen de faire progresser en continu, mais en sens inverse, respectivement dans le tambour extérieur, le solvant liquide enrichi au fur et à mesure par les éléments solubles, et dans le tambour intérieur, la matière solide, le tambour extérieur rotatif comportant en outre un certain nombre de godets horizontaux disposés selon plusieurs génératrices des tambours et godets ramenant le solvant, enrichi au fur et à mesure de sa progression, vers le haut, de manière à le redistribuer en cascade et en continu, au travers des perforations du tambour intérieur sur la matière solide.

Afin de mieux comprendre l'invention, on la décrit maintenant par rapport à un dessin annexé qui représente de manière exemplative et non limitative une forme de réalisation possible de l'invention.

La figure 1 représente un schéma général d'un appareil conforme à l'invention.

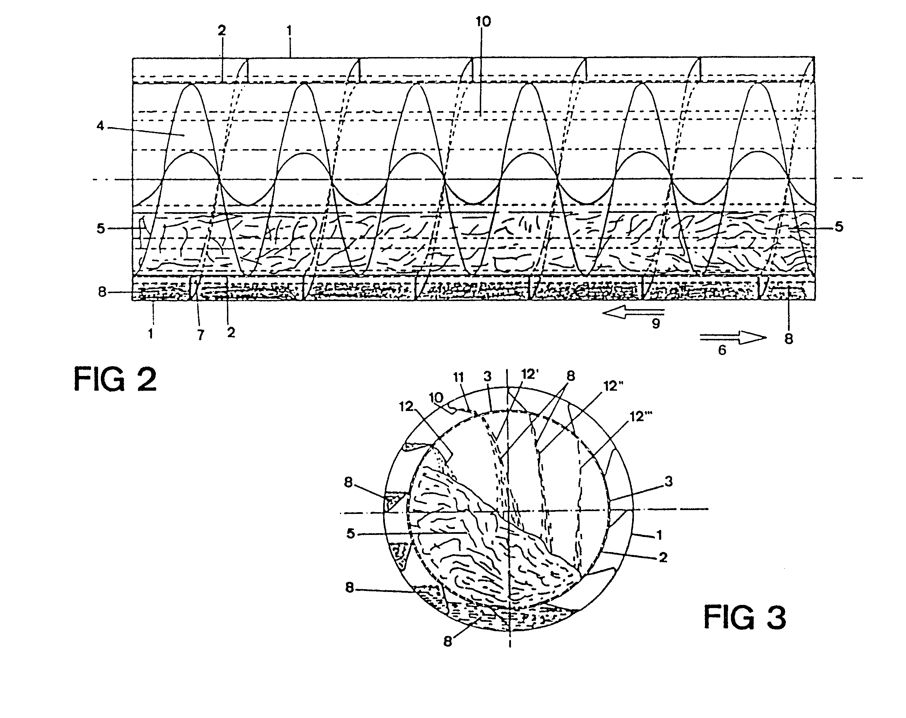

La figure 2 représente en coupe longitudinale une vue schématique dans les tambours.

La figure 3 représente en coupe transversale une vue schématique sur une partie de la longueur des tambours.

Dans ces figures on a représenté par 1 un tambour extérieur cylindrique rotatif (le dispositif de rotation connu en soi n'étant pas représenté), par 2 un tambour cylindrique placé coaxialement au tambour 1 et comportant sur sa surface des perforations 3. A l'intérieur de ce tambour 2, qui est entrainé en rotation par le tambour 1, est placé un jeu de spires 4 qui, sur toute la longueur du tambour 2, assure la progression de la matière solide 5 selon la flèche 6. Ces spires 4 peuvent être remplacées par des pales; elles peuvent être complètes (comme représenté) ou encore tronquées, de même les tambours 1 et 2 peuvent être à section constante ou variable.

Entre les tambours 1 et 2 on a également placé, sur toute la longueur du tambour 1, un autre jeu de spires 7 auquel on a donné une inclinaison inverse aux spires 4, et qui va assurer la progression du solvant liquide 8 selon la flèche 9 de sens inverse à la flèche 6. Ces spires 7 peuvent être remplacées par des pales; elles peuvent être complètes (comme représenté) ou encore tronquées. Entre la totalité de ces spires 7 et sur la totalité de la circonférence du tambour 1, sont disposés à distances régulières, un certain nombre de godets horizontaux 10 qui vont recueillir et ramener vers le haut, sous l'effet de la rotation des tambours 1 et 2, le solvant liquide 8.

L'inclinaison vers l'extérieur du fond 11 des godets 10 va permettre à ceux-ci de se vider progressivement lorsqu'ils remontent, de sorte que le solvant 8, qu'ils contiennent, s'écoule progressivement au travers des perforations 3 du tambour 2 et retombe en cascade 12, 12', 12",... sur la matière solide 5.

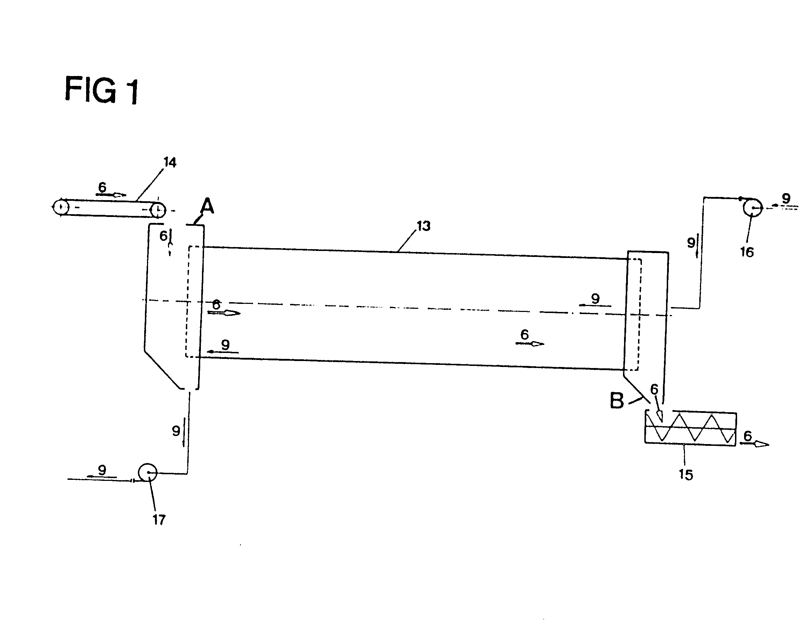

En se référant à la figure 1 on a encore représenté respectivement par A et par B, la section d'entrée et la section de sortie aux deux extrémités de l'extracteur 13 (constitué des deux tambours 1 et 2). A l'extrémité A, on va introduire la matière solide 5 froide amenée par le transporteur 14 ou par tout autre moyen qui va progresser dans l'extracteur 13 dans le sens de la flèche 6 pour ressortir chaude à l'extrémité B et y être reprise par une vis d'évacuation 15 ou par tout autre moyen.

Inversément, le solvant chaud 8, amené par un moyen 16, est introduit à l'extrémité B et va progresser dans l'extracteur 13 dans le sens de la flèche 9 pour ressortir froid à l'extrémité A et être évacué par un moyen 17.

Tout au long de l'extracteur 13, la matière solide 5 est continuellement brassée (retournée) par la rotation de l'extracteur; elle est progressivement réchauffée; elle est également continuellement arrosée par du solvant liquide 8 de plus en plus chaud, celui-ci s'écoulant continuellement au travers de la matière solide 5 à laquelle il cède donc continuellement ses calories.

Il en résulte une percolation continue et l'augmentation de la chaleur dans la masse solide 5 favorisant l'extraction de sa partie soluble, le solvant liquide 8 se transformant progressivement en soluté de plus en plus enrichi.

L'invention n'est pas limitée à la forme de réalisation décrite et représentée et l'on ne sortirait pas de son cadre en inversant le principe du procédé en vue soit de provoquer un transfert thermique inverse, soit aussi de réaliser un transfert de matière du liquide vers la matière solide ce qui dans ce cas, va permettre à la matière de capter les éléments contenus dans le liquide.

- 7 -

Revendications

1. Procédé de transfert d'énergie thermique entre un solvant liquide et une matière solide soluble, c'est-à-dire, généralement et de manière connue, préalablement broyée, défibrée ou découpée, et procédé plus particulièrement destiné à l'extraction de sucres, fécules ou autres éléments actifs de végétaux, caractérisé en ce que l'on met cette matière solide en progression continue, tout en effectuant simultanément son brassage, et qu'elle est soumise à un arrosage permanent par des fractions du solvant liquide de plus en plus enrichi et provenant de l'égouttage continu de la matière solide, ce solvant liquide et la matière solide progressant à contre courant l'une de l'autre de manière rigoureuse et prédéterminée, de sorte à réaliser un contact renouvelé entre le solvant liquide et la matière solide ce qui favorise à la fois l'échange thermique par conduction et l'extraction des éléments solubles.

2. Procédé de transfert d'énergie thermique selon la revendication 1, caractérisé en ce que l'on réalise, conjointement et en plus du transfert thermique, l'extraction complète en continu des produits solubles en prolongeant l'arrosage permanent et continu par des fractions du solvant liquide de plus en plus enrichi.

3. Appareil pour la mise en oeuvre du procédé selon l'une quelconque des revendications 1 ou 2, comportant à une extrémité une entrée par un moyen connu, de la matière solide froide et une sortie du solvant liquide ayant cédé ses calories et s'étant enrichi des éléments solubles et devenu soluté, et, à l'autre extrémité, une entrée du solvant chaud et une sortie de la matière solide réchauffée et dépouillée de ses éléments solubles et appareil caractérisé en ce qu'il est essentiellement constitué par un tambour extérieur rotatif de forme généralement cylindrique, placé horizontalement et à l'intérieur duquel est prévu coaxialement un autre tambour perforé, chacun des deux tambours comportant un moyen de faire progresser en continu, mais en sens inverse, respectivement dans le tambour extérieur, le solvant liquide enrichi au fur et à mesure par les éléments solubles, et dans le tambour intérieur la matière solide, le tambour extérieur rotatif comportant en outre une certain nombre de godets horizontaux disposés selon plusieurs génératrices des tambours et godets ramenant le solvant, enrichi au fur et à mesure de sa progression, vers le haut de manière à la redistribuer en cascade et en continu au travers des perforations du tambour intérieur sur la matière solide.

4. Appareil selon la revendication 3, caractérisé en ce que le moyen de faire progresser la matière solide, est un jeu de spires complètes ou tronquées ou encore de pales placées sur toute la longueur du tambour intérieur, et le moyen de faire progresser le solvant liquide, un autre jeu de spires complètes ou tronquées ou encore des pales placées sur toute la longueur entre les deux tambours, et dites spires inclinées en sens inverse des spires du tambour intérieur et entre lesquels sont disposés à distances régulières et sur toute la totalité du tambour, les godets horizontaux.

5. Appareil selon les revendications 3 et 4, caractérisé en ce que chacun des deux tambours est à section constante ou variable.

6. Appareil selon l'une quelconque des revendications 4 et 5, caractérisé en ce que les godets horizontaux ont un fond incliné vers l'extérieur du tambour extérieur.

FIG 1

1/2

0168371

FIG 2

FIG 3